# EUROPEAN PATENT SPECIFICATION

(11) **EP 3 627 766 B1**
(45) Date of publication and mention of the grant of the patent: **26.01.2022**
(21) Application number: 18814303.6
(22) Date of filing: 06.06.2018
(51) Int. Cl.: H04L 12/24, H04L 12/28

(54) **METHOD AND SYSTEM FOR SWITCHING BETWEEN ACTIVE BNG AND STANDBY BNG**
VERFAHREN UND SYSTEM ZUM UMSCHALTEN ZWISCHEN AKTIVEM BNG UND STANDBY-BNG
PROCÉDÉ ET SYSTÈME DE COMMUTATION ENTRE BNG ACTIVE ET BNG DE REMPLACEMENT

(30) Priority: 08.06.2017 CN 201710429393
(43) Date of publication of application: 25.03.2020
(73) Proprietor: Huawei Technologies Co., Ltd., Longgang District Shenzhen, Guangdong 518129 (CN)
(72) Inventor: PENG, Shuping, Shenzhen Guangdong 518129 (CN); GUO, Hongtao, Shenzhen Guangdong 518129 (CN); CHEN, Guoyi, Shenzhen Guangdong 518129 (CN)
(74) Representative: Grünecker Patent- und Rechtsanwälte PartG mbB
(86) International application number: PCT/CN2018/090135
(87) International publication number: WO 2018/223991

(56) References cited:
- WO-A1-2016/141143
- CN-A- 1 533 100
- CN-A- 102 447 742
- CN-A- 102 611 519
- US-A1- 2011 046 792
- US-A1- 2014 328 161
- US-B1- 6 888 937

## Description

### TECHNICAL FIELD

The present invention relates to the communications field, and in particular, to a method and a system for switching a primary broadband network gateway (English: broadband network gateway, BNG for short) and a backup BNG, and a BNG

### BACKGROUND

In a scenario in which a user accesses a network by using a plurality of BNGs, the plurality of BNGs may form a virtual router redundancy protocol (English: Virtual Router Redundancy Protocol, VRRP for short) VRRP group by using a VRRP, and negotiate to obtain a primary BNG and a backup BNG of the VRRP group. The VRRP group is equivalent to a virtual router, and a host in a local area network needs to learn only an internet protocol (English: Internet Protocol, IP for short) address of the virtual router instead of an IP address of a specific BNG A default gateway of the host in the local area network is set to the IP address of the virtual router, and the host may communicate with an external network by using the default gateway. To reduce impact of a BNG fault on a service and improve network stability, each BNG in the VRRP group may perform, through bidirectional forwarding detection (English: Bidirectional Forwarding Detection, BFD for short) or ethernet operation, administration, and maintenance (English: Ethernet Operation, Administration, and Maintenance, ETH OAM for short), a fast fault detection on a communication link between devices connected to the BNG A link fault can be detected in a millisecond time by using a BFD function or an ETH OAM function when the communication link is faulty. Based on the VRRP protocol, a primary-secondary switchover can be quickly performed.

In the foregoing process of switching the primary BNG and the backup BNG, to ensure that the user service is not interrupted when a fault occurs, common attribute information of the primary BNG and the backup BNG and service information of the user are backed up together to the backup BNG after the primary BNG and the backup BNG are determined based on the VRRP protocol. Consequently, the backup BNG is always in a backup status, and the backup BNG always runs but does not process the service of the user. This leads to a waste of communication resources between the backup BNG and the primary BNG and a waste of central processing unit (English: central processing unit, CPU) resources of the backup BNG US 2014/0328161 A1 discloses a method of switching from a primary BNG to a backup BNG in case of faulty operation of the primary BGN.

### SUMMARY

Embodiments of this application provide a method, a system and a computer-readable storage medium, for switching a primary BNG and a backup BNG, and a BNG, so as to reduce a waste of communication resources between the primary BNG and the backup BNG and a waste of CPU resources of the backup BNG

According to a first aspect, an embodiment of the present invention provides a method for switching a primary BNG and a backup BNG, as defined by the appended independent claim 1.

In the foregoing solution, the first BNG does not need to directly back up the common attribute information of the first BNG and the second BNG, the static information of the first user, and the dynamic information generated by the service on the first BNG together to the backup BNG Consequently, the backup BNG keeps running but cannot process the service of the user, thereby resulting in a waste of communication resources of the backup BNG and a waste of CPU resources. In addition, the second BNG reads, from the database only when the second BNG encounters a fault, the dynamic information generated by the service on the first BNG In this way, a waste of CPU resources of the backup BNG can be further reduced.

With reference to the first aspect, in a first possible implementation, the method further includes:
during the switching, by the second BNG, to the primary BNG, and replacing the first BNG to process the service, synchronously writing, by the second BNG, dynamic information generated by the service on the second BNG into the database.

According to the foregoing method, the second BNG may back up the dynamic information generated by the service on the second BNG to the database, so that when the second BNG encounters a fault, the first BNG may read the dynamic information generated by the service on the second BNG from the database and replace the second BNG to process the service of the first user, thereby improving network stability.

With reference to the first aspect, in a second possible implementation, for the first BNG and the second BNG, it is determined, by using a VRRP, that the first BNG is the primary BNG and that the second BNG is the backup BNG

In the foregoing solution, the first BNG and the second BNG form one VRRP backup group by using the VRRP, and the VRRP backup group is equivalent to one virtual router. When the first BNG encounters a fault, the second BNG replaces the first BNG to process the service of the first user. In this case, the VRRP backup group including the first BNG and the second BNG can uninterruptedly process the service of the first user.

According to a second aspect, the present invention provides a BNG, as defined by the appended independent claim 4.

The common attribute information of the first BNG and the second BNG, the static information of the first user, and the dynamic information generated by the service on the first BNG are not backed up to the second BNG. The second BNG may read the information from the database, to avoid that the second BNG can only stay in a running state but cannot process the service, thereby reducing a waste of resources of the second BNG In addition, the second BNG may alternatively read, from the database only when the first BNG encounters a fault, the dynamic information generated by the service on the primary BNG In this way, CPU resource efficiency of the second BNG can be improved.

With reference to the second aspect, in a possible implementation, the second BNG further includes a writing unit, where the writing unit is configured to: when the second BNG processes the service, synchronously write dynamic information generated by the service on the second BNG into the database.

According to a third aspect, this application provides a computer-readable storage medium, as defined by the appended independent claim 6. The computer-readable storage medium stores an instruction. When the instruction runs on a computer, the computer is enabled to perform the method according to the first aspect.

### BRIEF DESCRIPTION OF DRAWINGS

FIG. 1 is a schematic diagram of a networking architecture according to an embodiment of this application;
FIG. 2 is a schematic diagram of an application scenario according to an embodiment of the present invention;
FIG. 3 is a schematic flowchart of a method for switching a primary BNG and a backup BNG according to an embodiment of the present invention;
FIG. 4 is a schematic flowchart of another method for switching a primary BNG and a backup BNG according to an embodiment of the present invention;
FIG. 5 is a schematic structural diagram of a BNG according to an embodiment of the present invention;
FIG. 6 is a schematic structural diagram of another BNG according to an embodiment of the present invention; and
FIG. 7 is a schematic structural diagram of a system for switching a primary BNG and a backup BNG according to an embodiment of the present invention.

### DESCRIPTION OF EMBODIMENTS

The following further describes in detail this application with reference to the accompanying drawings.

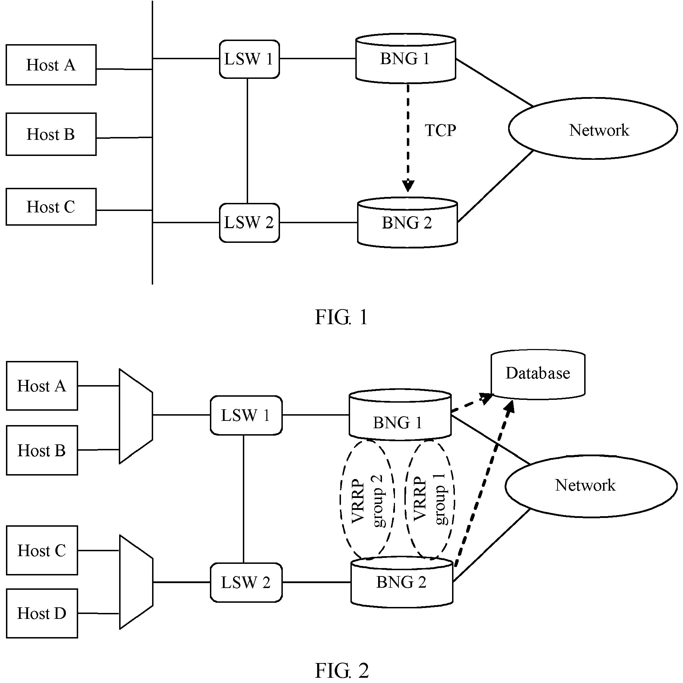

FIG. 1 provides a schematic diagram of a networking architecture of a method for switching a primary BNG and a backup BNG The architecture includes a host A, a host B, a host C, local area network switches (English: local area network switch, LSW for short) LSW 1 and an LSW 2, a primary BNG 1, a backup BNG 2, and an external network. A BNG may be a broadband access server (English: Broadband access server, BAS for short), a broadband remote access server (English: Broadband remote access server, BRAS), a broadband network access server (English: broadband network access server, BNAS), a layer-2 tunnel protocol network server (English: L2TP network server, LNS), a service router (English: service router, SR), or the like. The BNG 1 and the BNG 2 form a virtual router by using a VRRP. The host A, the host B, and the host C in a local area network can access the BNG provided that the host A, the host B, and the host C learn an IP address of the virtual router, and communicate with the external network. The host A, the host B, and the host C in the local area network do not need to learn a specific IP address of the BNG 1 and the BNG 2. The VRRP ensures, by using a mechanism, that services of the host A, the host B, and the host C switch to the backup BNG 2 in time when the BNG 1 encounters a fault and is incapable of continuing processing the services of the host A, the host B, and the host C, thereby ensuring continuity and reliability of an access service of the host A, the host B, and the host C.

For the BNG 1 and the BNG 2, a primary BNG and a backup BNG need to be determined through negotiation by using the VRRP. For example, it is determined that the BNG 1 is the primary BNG and that the BNG 2 is the backup BNG Switching the primary BNG and the backup BNG is described below by using an example in which the BNG 1 is used as the primary BNG and the BNG 2 is used as the backup BNG. The host A is used as an example. When the host A sends a go-online request to the virtual router including the BNG 1 and the BNG 2, both the BNG 1 and the BNG 2 receive the go-online request. However, because the BNG 1 is the primary BNG, the BNG 1 processes the go-online request, including authentication, real-time charging, authorization, and the like. The BNG 2 serving as the backup BNG actively discards the go-online request. After the host A goes online by using the BNG 1, the BNG 1 synchronously writes common attribute information of the BNG 1 and the BNG 2 and user information of the host A to the BNG 2 by using a transmission control protocol (English: Transmission Control Protocol, TCP for short). The BNG 2 generates a user service corresponding to the user information, to ensure that when the BNG 1 encounters a fault, the BNG 2 can smoothly take over a service of the host A, thereby ensuring continuity of the service of the host and reducing a loss caused by the fault. Procedures in which the BNG 1 and the BNG 2 perform processing for the host B and the host C are similar to the procedure for the host A.

However, in the foregoing method, to ensure that the service of the host A, the host B, and the host C for accessing the BNG is not interrupted due to the fault of the BNG 1, the common attribute information of the BNG 1 and the BNG 2, static information of a user, and user dynamic information generated by the user service on the primary BNG need to be backed up to the BNG 2. When a backup service is actually deployed, the common attribute information of the BNG 1 and the BNG 2 includes same parameters such as an IP address pool, a virtual local area network (English: virtual local area network, VLAN for short), and a quality of service (English: quality of service, QoS for short) policy. Usually, the BNG 1 uniformly backs up, without distinction, the common attribute information of the BNG 1 and the BNG 2, the static information of the user, and the user dynamic information generated by the user service on the BNG 1 to the BNG 2. In this way, the BNG 2 not only is in a passive backup status, but also is in a running state but cannot process a go-online service of a host. The BNG 2 may process the go-online service of the host A, the host B, and the host C only when the BNG 1 encounters a fault and the BNG 2 is set to the primary BNG. In addition, when the BNG 2 performs backup, the common attribute information of the BNG 1 and the BNG 2, the user static information in the BNG 1, and the dynamic information generated by the user service on the BNG 1 are uniformly backed up without distinction. This uniform backup causes the BNG 2 to perform an unnecessary backup operation, resulting in a waste of communication resources between the BNG 1 and the BNG 2 and a waste of CPU resources of the BNG 1 and the BNG 2.

To reduce resource waste caused by a failure of the BNG 2 to process a go-online service when the BNG 2 is in a backup status, FIG. 2 is a schematic diagram of an application scenario for resolving the foregoing technical problem according to this application. In the specific implementation, the BNG 1 and the BNG 2 may be configured as one VRRP group by using a VRRP. For example, the BNG 1 is a primary BNG, and the BNG 2 is a backup BNG. Alternatively, the BNG 1 and the BNG 2 may be configured, by using the VRRP, as two VRRP groups to implement load sharing and mutual backup. For example, in a VRRP group 1, the BNG 1 is a primary BNG, and the BNG 2 is a backup BNG; in a VRRP group 2, the BNG 2 is a primary BNG, and the BNG 1 is a backup BNG. In this way, both the BNG 1 and the BNG 2 may process a go-online service of a host. For example, a go-online request of the host A and the host B is processed by the BNG 1 in the VRRP group 1, and the BNG 2 is the backup BNG in the VRRP group 1. A go-online request of the host C and a host D is processed by the BNG 2 in the VRRP group 2. In this case, the BNG 1 is the backup BNG in the VRRP group 2. For the VRRP group 1, common attribute information of the BNG 1 and the BNG 2 and static information of a user processed by the BNG 1 do not need to be directly backed up to the BNG 2, but may be written by the BNG 1 into a database (English: database, DB for short). The DB stores the common attribute information of the BNG 1 and the BNG 2 that are in the VRRP group 1 and the static information of the user processed by the BNG 1. Similarly, the BNG 2 in the VRRP group 2 may also write common attribute information for the VRRP group 2 and static information of the user processed by the BNG 2 into the DB, and the DB stores the common attribute information for the VRRP 2 and the static information of the user processed by the BNG 2. For example, when a primary-secondary relationship between the BNG 1 and the BNG 2 is determined in the VRRP group 1, that is, when it is determined that the BNG 1 is the primary BNG and the BNG 2 is the backup BNG in the VRRP group 1, the BNG 1 writes the common attribute information for the VRRP group 1, the static information of the user processed by the BNG 1, and dynamic information processed by the BNG 1 that is generated by a user service on the BNG 1 into the DB for backup, where the common attribute information, the static information, and the dynamic information need to be backed up. The BNG 2 may read, from the DB, the common attribute information of the BNG 1 and the BNG 2 and the static information of the user processed by the BNG 1. If the BNG 1 in the VRRP group 1 encounters a fault and is incapable of continuing processing the go-online service of the user, the BNG 2 may obtain, from the DB, the dynamic information processed by the BNG 1 that is generated by the user service on the BNG 1, to replace the BNG 1 to continue to process the user service processed by the BNG 1. In this way, the BNG 2 not only is not in a passive backup status, but also can classify required information read from the DB, thereby reducing a waste of communication resources and a waste of CPU resources. A working process of switching the primary BNG and the backup BNG is further described below by using an example of switching the primary BNG and the backup BNG provided in this embodiment of this application.

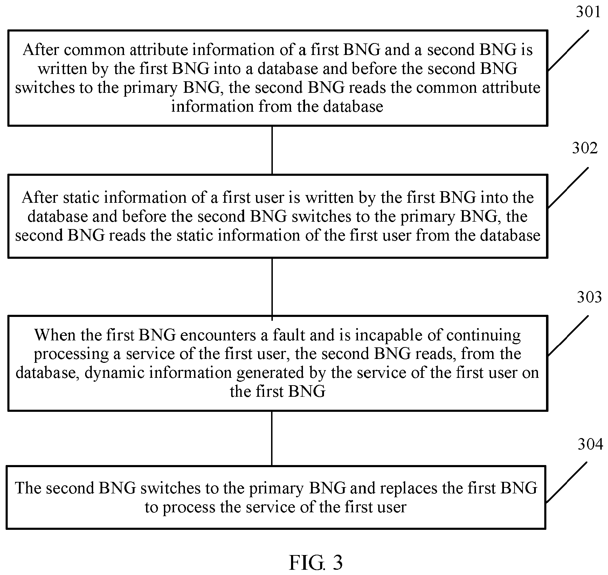

FIG. 3 is a schematic flowchart of a method for switching a primary BNG and a backup BNG The method is applied to a system including a database, a first BNG, and a second BNG. The first BNG is the primary BNG, and the second BNG is the backup BNG The first BNG processes a service of a first user. The method specifically includes the following steps.

S301: After common attribute information of the first BNG and the second BNG is written by the first BNG into the database and before the second BNG switches to the primary BNG, the second BNG reads the common attribute information of the first BNG and the second BNG from the database.

In a specific implementation, optionally, the first BNG and the second BNG may determine, by using a VRRP, that the first BNG is the primary BNG and that the second BNG is the backup BNG; and the first BNG and the second BNG form one VRRP group, and the VRRP group is equivalent to a virtual router. When a backup service is actually deployed, the first BNG and the second BNG need to ensure configuration consistency. For example, the first BNG and the second BNG are configured with same parameters such as an IP address pool, a VLAN, and a QoS policy. These parameters are the common attribute information of the first BNG and the second BNG, in other words, the common attribute information of the first BNG and the second BNG includes at least the IP address pool, the VLAN, and the QoS policy of the VRRP group. The first BNG backs up the common attribute information into the database. Because the common attribute information of the first BNG and the second BNG is written by the first BNG into the database when a primary-secondary relationship between the first BNG and the second BNG is determined, that is, when it is determined that the first BNG is the primary BNG and that the second BNG is the backup BNG, the first BNG writes the common attribute information into the database. Therefore, the first BNG quickly writes the common attribute information into the database. Any time after the first BNG writes the common attribute information into the database and before the second BNG switches to the primary BNG, the second BNG may read the common attribute information from the database.

S302: After static information of the first user is written by the first BNG into the database and before the second BNG switches to the primary BNG, the second BNG reads the static information of the first user from the database;

In a specific implementation, when the service of the first user accesses the first BNG, the first BNG writes the static information of the first user into the database for backup. The static information of the first user includes information that does not change frequently with time, such as a media access control (English: media access control, MAC for short) address and a session identifier (English: session identifier, Session ID for short) of the first user. For example, any time after the first BNG writes the static information of the first user such as a MAC address and a session ID of the first user into the database and before the second BNG switches to the primary BNG, the second BNG may read the static information of the first user from the database, to share the static information of the first user with the first BNG

S303: When the first BNG encounters a fault and is incapable of continuing processing the service, the second BNG reads, from the database, dynamic information generated by the service on the first BNG. The dynamic information generated by the service on the first BNG is synchronously written by the first BNG into the database.

In a specific implementation, to reduce impact of a BNG fault on the service, a link fault may be quickly detected through BFD or ETH OAM. When it is detected that the first BNG encounters a fault and is incapable of continuing processing the service of the first user, the second BNG reads, from the database, the dynamic information generated by the service of the first user on the first BNG The dynamic information includes charging information that is used for real-time traffic statistics collection, such as an up/down-pack (English: up/down-pack) or an up/down-byte (English: up/down-byte). The dynamic information generated by the service of the first user on the first BNG is synchronously written by the first BNG into the database.

S304: The second BNG switches to the primary BNG and replaces the first BNG to process the service.

In a specific implementation, the second BNG switches from the backup BNG to a new BNG, and replaces the first BNG to continue to process the service of the first user.

In the foregoing solution of this embodiment of the present invention, the common attribute information of the primary BNG and the backup BNG, the dynamic information generated by the service of the first user on the first BNG, and the static information of the first user are classified and backed up by using the database, so that the first BNG does not need to directly back up the common attribute information of the first BNG and the second BNG, the static information of the first user, and the dynamic information generated by the service on the first BNG to the backup BNG. Consequently, the backup BNG keeps running but cannot process the service, thereby resulting in a waste of communication resources between BNGs and a waste of CPU resources of the BNG. In addition, the second BNG reads, from the database only when the second BNG encounters a fault, the dynamic information generated by the service on the first BNG In this way, a waste of CPU resources of the backup BNG can be further reduced. The common attribute information of the primary BNG and the backup BNG, the static information of the first user, and the dynamic information generated by the service of the first user on the first BNG are separated from the primary BNG and the backup BNG by using the database. Therefore, backup information may be further decoupled from the primary BNG and the backup BNG.

Optionally, the method further includes: When the first BNG recovers from the fault, the service of the first user is switched back to the first BNG; the first BNG obtains, from the database, dynamic information generated by the service on the second BNG; and the dynamic information generated by the service on the second BNG is synchronously written by the second BNG into the database.

In a specific implementation, when the fault of the first BNG is removed and the service of the first user can be processed, the service of the first user is switched back to the first BNG The service of the first user is processed by the first BNG, and the first BNG may obtain, from the database, dynamic information of the first user required to process the service of the first user. The dynamic information of the first user is backed up by the second BNG to the database.

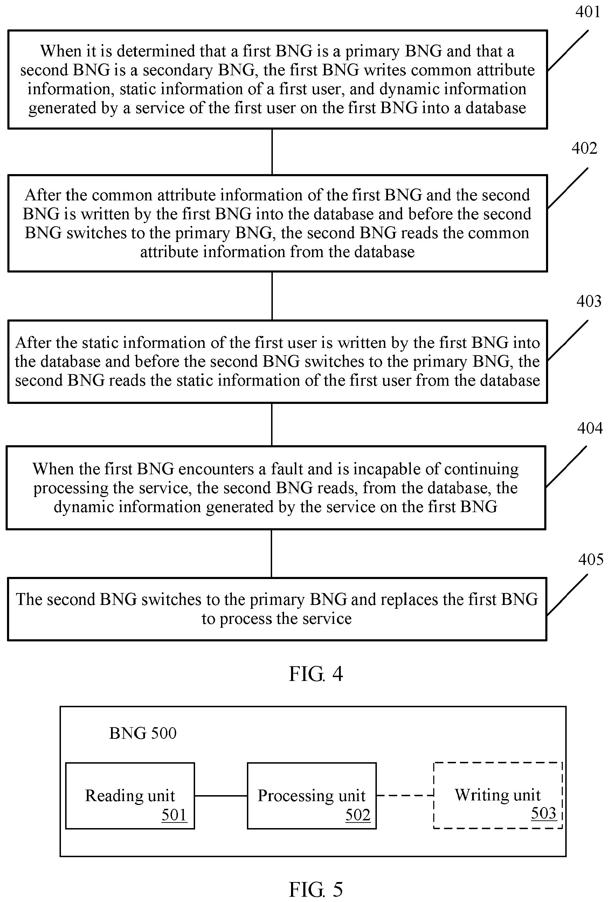

FIG. 4 is a schematic flowchart of another method for switching a primary BNG and a backup BNG according to this application. The method is applied to a system including a database, a first BNG, and a second BNG. The first BNG processes a service of a first user. The method includes the following steps.

S401: When it is determined that the first BNG is the primary BNG and that the second BNG is the backup BNG, the first BNG writes common attribute information of the first BNG and the second BNG, static information of the first user, and dynamic information generated by the service of the first user on the first BNG into the database.

Optionally, for the first BNG and the second BNG, it is determined, by using a VRRP, that the first BNG is the primary BNG and that the second BNG is the backup BNG

In a specific implementation, the first BNG and the second BNG form one VRRP group by using the VRRP. The VRRP group is functionally equivalent to a virtual router, and the virtual router is configured with a virtual IP address and a virtual MAC address. A first user in a local area network sets the virtual IP address of the virtual router to a default gateway, and communicates with an external network by using the virtual router. The primary BNG and the backup BNG are determined based on a priority of the first BNG and a priority of the second BNG in the VRRP group by using the VRRP. For example, a first BNG with a higher priority is determined as the primary BNG, and a second BNG with a lower priority is determined as the backup BNG. The first BNG notifies the second BNG and the first user of the virtual MAC address of the virtual router by sending a free address resolution protocol (English: Address Resolution Protocol, ARP for short) packet, to undertake a packet forwarding task of the first user and help the first user to communicate with the external network.

When it is determined, by using the VRRP, that the first BNG is the primary BNG and that the second BNG is the backup BNG, the first BNG writes the common attribute information of the first BNG and the second BNG, the static information of the first user, and the dynamic information generated by the service of the first user on the first BNG into the database for backup, and the dynamic information generated by the service of the first user on the first BNG is synchronously written into the database. The common attribute information of the first BNG and the second BNG includes same parameters such as an IP address pool, a VLAN, and a QoS policy that are configured for the first BNG and the second BNG. The static information of the first user includes information that does not change frequently with time, such as a MAC address and a session ID. The dynamic information generated by the service of the first user on the first BNG includes charging information that is used for real-time traffic statistics collection, such as an up/down-pack or an up/down-byte. The common attribute information of the first BNG and the second BNG, the static information of the first user, and the dynamic information generated by the service of the first user on the first BNG are all used by the BNG to process a service of the first user for communicating with the external network.

S402: After the common attribute information of the first BNG and the second BNG is written by the first BNG into the database and before the second BNG switches to the primary BNG, the second BNG reads the common attribute information of the first BNG and the second BNG from the database.

In a specific implementation, when it is determined that the first BNG is the primary BNG and that the second BNG is the backup BNG, the first BNG writes the common attribute information of the first BNG and the second BNG into the database, to perform backup in the database. After the common attribute information is written to the database and before the second BNG switches to the primary BNG, the second BNG may read the common attribute information from the database. The common attribute information includes parameters such as an IP address pool, a VLAN, and a QoS policy.

S403: After the static information of the first user is written by the first BNG into the database and before the second BNG switches to the primary BNG, the second BNG reads the static information of the first user from the database.

In a specific implementation, when it is determined that the first BNG is the primary BNG and that the second BNG is the backup BNG, the first BNG writes the static information of the first user into the database. In a process that is after the first BNG writes the static information of the first user into the database and before the second BNG switches to the primary BNG, the second BNG may read the static information of the first user from the database, and the static information of the first user includes a MAC address of the first user and a session identifier of the first user.

S404: When the first BNG encounters a fault and is incapable of continuing processing the service, the second BNG reads, from the database, the dynamic information generated by the service on the first BNG The dynamic information generated by the service on the first BNG is synchronously written by the first BNG into the database.

In a specific embodiment, the first BNG serves as the primary BNG to undertake a task of processing the service of the first user, and the second BNG serves as the backup BNG that is in a ready and listening state. The second BNG may monitor reachability of an IP address on the first BNG through BFD. If the first BNG encounters a fault, the second BNG may determine a fault change through BFD. In this case, the second BNG reads, from the database, the dynamic information generated by the service on the first BNG. The dynamic information includes the charging information that is used for real-time traffic statistics collection, such as an up/down-pack or an up/down-byte, and the dynamic information generated by the service on the first BNG is synchronously written by the first BNG into the database.

S405: The second BNG switches to the primary BNG and replaces the first BNG to process the service.

In a specific embodiment, to ensure network transmission stability, the second BNG may monitor a status of the first BNG by using a BFD technology, so that when the first BNG encounters a fault, the second BNG can immediately switch to a new primary BNG and replaces the first BNG to process the service of the first user.

Optionally, the method further includes: when the second BNG switches to the primary BNG and replaces the first BNG to process the service, writing, by the second BNG, dynamic information generated by the service on the second BNG into the database. When the first BNG recovers from the fault, the first BNG reads the dynamic information generated by the service on the second BNG from the database. The first BNG replaces the second BNG to process the service.

In a specific implementation, when the second BNG becomes the new primary BNG and replaces the first BNG to process the service, the second BNG needs to write the dynamic information generated by the service of the first user on the second BNG into the database. When the first BNG recovers from the fault, the first BNG may read, from the database, the dynamic information generated by the service on the second BNG. The first BNG switches to the primary BNG and replaces the second BNG to process the service of the first user.

FIG. 5 shows a BNG 500 according to this application. The BNG 500 is applied to a system including a database and a first BNG, the BNG 500 is a second BNG in the system, the first BNG is a primary BNG, the second BNG 500 is a backup BNG, the first BNG processes a service of a first user, and the second BNG 500 includes a reading unit 501 and a processing unit 502.

The reading unit 501 is configured to: after common attribute information of the first BNG and the second BNG 500 is written by the first BNG into the database and before the second BNG 500 switches to the primary BNG, read the common attribute information of the first BNG and the second BNG 500 from the database; and after static information of the first user is written by the first BNG into the database and before the second BNG 500 switches to the primary BNG, read the static information of the first user from the database.

The reading unit 501 is further configured to: when the first BNG encounters a fault and is incapable of continuing processing the service, read, from the database, dynamic information generated by the service on the first BNG, where the dynamic information generated by the service on the first BNG is synchronously written by the first BNG into the database.

The processing unit 502 is configured to: switch the second BNG 500 to the primary BNG, and enable the second BNG 500 to replace the first BNG to process the service.

In a specific implementation, for a specific implementation of the reading unit 501, refer to a specific condition and a process that are executed by the second BNG in FIG. 3 and FIG. 4 and in which the primary BNG and the backup BNG read the common attribute information of the first BNG and the second BNG from the database, the static information of the first user, and the dynamic information generated by the service of the first user on the first BNG. For brevity, details are not described herein again. For a specific implementation of the processing unit 502, refer to step 304 in FIG. 3 and step 405 in FIG. 4 in which the second BNG switches to the primary BNG and replaces the first BNG to process the service. For brevity, details are not described herein again.

Optionally, the second BNG further includes a writing unit 503, and the write unit 503 is configured to: when the processing unit processes the service, write dynamic information generated by the service on the second BNG into the database.

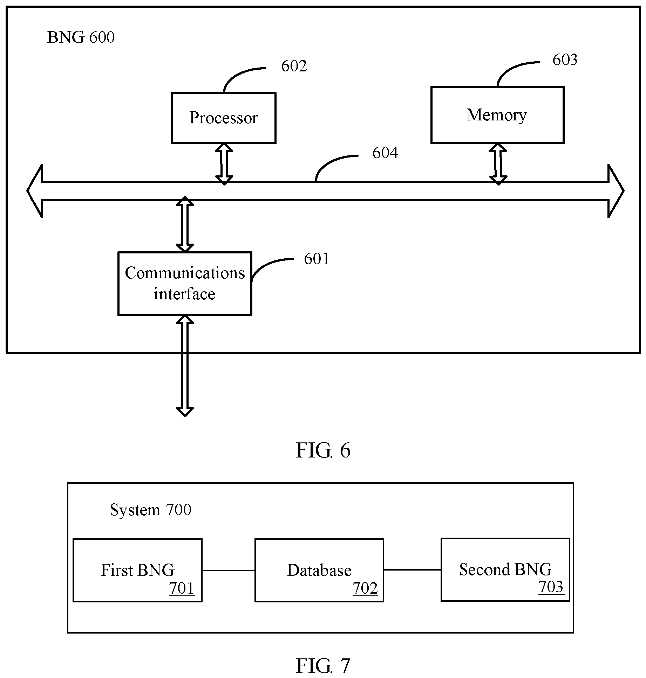

FIG. 6 shows an embodiment of another BNG 600 according to this application. The BNG 600 is applied to a system including a database and a first BNG, the BNG is a second BNG in the system, the first BNG is a primary BNG, the second BNG is a backup BNG, the primary BNG processes a service of a first user, and the second BNG 600 includes a communications interface 601 and a processor 602. The BNG 600 shown in FIG. 6 may be the second BNG in the foregoing method embodiments in FIG. 3 and FIG. 4, and may implement the functions of the second BNG. The second BNG includes the communications interface 601, the processor 602, a memory 603, and a bus 604 connected to the processor 602, the communications interface 601, and the memory 603. The communications interface 601 is configured to perform communication between the second BNG and the database. The memory 603 is configured to store a program instruction. The memory 603 may include a high-speed random access memory (English: random access memory, RAM for short), and may further include a non-volatile memory (non-volatile memory), for example, at least one magnetic disk storage. The processor 602 may invoke the program instruction stored in the memory 603 to perform a corresponding function.

In a specific implementation,
the communications interface 601 is configured to: after common attribute information of the first BNG and the second BNG 600 is written by the first BNG into the database and before the second BNG switches to the primary BNG, read the common attribute information of the first BNG and the second BNG 600 from the database; and after static information of the first user is written by the first BNG into the database and before the second BNG 600 switches to the primary BNG, read the static information of the first user from the database.

The communications interface 601 is further configured to, when the first BNG encounters a fault and is incapable of continuing processing the service, receive, from the database, dynamic information generated by the service on the first BNG, where the dynamic information generated by the service on the first BNG is synchronously written by the first BNG into the database.

The processor 602 is configured to: switch to the primary BNG and replace the first BNG to process the service.

Optionally, the communications interface 601 is further configured to: when the processor processes the service, send dynamic information generated by the service on the second BNG to the database.

In this implementation, for specific implementation of the communications interface 601 and the processor 602, refer to the functions and the implementation steps of the second BNG in FIG. 3 and FIG. 4. For brevity, details are not described.

It should be noted that in the implementation, in addition to the conventional manners such as the foregoing several manners of executing a program code instruction in the memory by using the processor, the implementation may also be based on a virtual first BNG and a virtual second BNG that are implemented by a physical server by using a network function virtualization NFV technology. After reading this application, a person skilled in the art may virtualize a first BNG and a second BNG with the foregoing functions on a physical server by using the NFV technology. Details are not described herein.

FIG. 7 shows a system 700 for switching a primary BNG and a backup BNG according to this application. The system includes a database 702, a first BNG 701, and a second BNG 703, and the first BNG 701 processes a service of a first user.

The first BNG 701 is configured to: when it is determined that the first BNG 701 is the primary BNG and that the second BNG 703 is the backup BNG, write common attribute information of the first BNG 701 and the second BNG 703, static information of the first user, and dynamic information generated by the service of the first user on the first BNG 701 into the database 702.

The second BNG 703 is configured to: after the common attribute information of the first BNG 701 and the second BNG 703 is written into the database 702 and before the second BNG 703 switches to the primary BNG, read the common attribute information of the first BNG 701 and the second BNG 703 from the database 702. After the static information of the first user is written by the first BNG 701 into the database and before the second BNG 703 switches to the primary BNG, the second BNG 703 reads the static information of the first user from the database. When the first BNG 701 encounters a fault and is incapable of continuing processing the service, the second BNG 703 reads, from the database, the dynamic information generated by the service on the first BNG 701. The dynamic information generated by the service on the first BNG 701 is synchronously written by the first BNG 701 into the database 702. The second BNG 703 replaces the first BNG 701 to process the service.

Optionally, the second BNG 703 is further configured to: when the second BNG 703 switches to the primary BNG and replaces the first BNG 701 to process the service, write dynamic information generated by the service on the second BNG 703 into the database.

The database 702 is further configured to store the dynamic information generated by the service on the second BNG 703.

The database 702 is configured to store the common attribute information of the first BNG 701 and the second BNG 703, the static information of the first user, and the dynamic information generated by the service on the first BNG that are written by the first BNG 701.

In the specific implementation, for specific implementation of the first BNG 701, refer to the functions and the implementation steps of the first BNG in the methods in FIG. 3 and FIG. 4. For the database 702, refer to the functions and the implementation steps of the database in the methods in FIG. 3 and FIG. 4. For the second BNG 703, refer to the functions and the implementation steps of the second BNG in the methods in FIG. 3 and FIG. 4. For brevity, details are not described herein again.

In the several embodiments provided in this application, it should be understood that the disclosed systems and methods may be implemented in another manner. For example, the foregoing described apparatus embodiment is merely used as an example. For example, the module division is merely a logical function division and another division may be used in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or the communication connections between the apparatuses or units may be implemented in electronic, mechanical, or another form.

The module described as a separate part may or may not be physically separate, and the part displayed as the module may or may not be a physical unit, may be located in one position, or may be distributed on a plurality of network units. Some or all of the units may be selected based on an actual requirement to achieve the objectives of the solutions of the embodiments.

In addition, functional modules in the embodiments of the present invention may be integrated into one processing unit, or each of the modules may exist alone physically, or two or more modules are integrated into one module. The integrated module may be implemented in a form of hardware, or may be implemented in a form of hardware in addition to a software functional unit.

All or some of the foregoing embodiments may be implemented by using software, hardware, firmware, or any combination thereof. When software is used to implement the embodiments, the embodiments may be all or partially implemented in a form of a computer program product. The computer program product may be stored in a computer-readable storage medium or may be transmitted from a computer-readable storage medium to another computer-readable storage medium. For example, the computer instructions may be transmitted from a website, a computer, a server, or a data center to another website, another computer, another server, or another data center in a wired (such as a coaxial cable, an optical fiber, or a digital subscriber line (DSL)) or wireless (for example, infrared or radio microwave) manner. The computer-readable storage medium may be any usable medium accessible by a computer, or a data storage device, such as a server or a data center, integrating one or more usable media. The usable medium may be a magnetic medium, an optical medium, a semiconductor medium, or the like.

## Claims

1. A method for switching a primary broadband network gateway, BNG, and a backup BNG, wherein the method is applied to a system comprising a database, a first BNG, and a second BNG; the first BNG is the primary BNG, and the second BNG is the backup BNG; the primary BNG processes a service of a user; and the method comprises
after common attribute information of the first BNG and the second BNG is written by the first BNG into the database and before the second BNG switches to the primary BNG, reading (301), by the second BNG, the common attribute information of the first BNG and the second BNG from the database, wherein the common attribute information of the first BNG and the second BNG includes an Internet Protocol, IP, address pool, information associated with virtual local area network, VLAN, or a quality of service, QoS, policy;
after static information of the user is written by the first BNG into the database and before the second BNG switches to the primary BNG, reading (302), by the second BNG, the static information of the user from the database, wherein the static information of the user is used to identify the user;
monitoring a status of the first BNG by the second BNG through link detection to determine whether the first BNG encounters a fault; when the second BNG determines that the first BNG encounters the fault and is incapable of continuing processing the service, reading (303), by the second BNG from the database, dynamic information generated by the service on the first BNG, wherein the dynamic information generated by the service on the first BNG is synchronously written by the first BNG into the database, wherein the dynamic information generated by the service on the first BNG includes charging information that is used for real-time traffic statistics collection; and
switching (304), by the second BNG, to the primary BNG, and replacing the first BNG to process the service when the second BNG determines that the first BNG encounters the fault.

2. The method according to claim 1, wherein the method further comprises:
during the switching, by the second BNG, to the primary BNG, and replacing the first BNG to process the service, synchronously writing, by the second BNG, dynamic information generated by the service on the second BNG into the database.

3. The method according to claim 1 or 2, wherein for the first BNG and the second BNG, it is determined, by using a virtual router redundancy protocol VRRP, that the first BNG is the primary BNG and that the second BNG is the backup BNG.

4. A broadband network gateway, BNG, wherein the BNG is a second BNG in a system, the system further comprises a database and a first BNG, the second BNG is a backup BNG, the first BNG is a primary BNG, the first BNG processes a service of a user, and the second BNG comprises:
a reading unit (501), configured to: after common attribute information of the first BNG and the second BNG is written by the first BNG into the database and before the second BNG switches to the primary BNG, read the common attribute information of the first BNG and the second BNG from the database, wherein the common attribute information of the first BNG and the second BNG includes an Internet Protocol, IP, address pool, information associated with virtual local area network, VLAN, or a quality of service, QoS, policy; and after static information of the user is written by the first BNG into the database and before the second BNG switches to the primary BNG, read the static information of the user from the database, wherein the static information of the user is used to identify the user , and
a monitoring unit configured to monitor a status of the first BNG by the second BNG through link detection to determine whether the first BNG encounters a fault; and wherein the reading unit (501) is further configured to: when the monitoring unit determines that the first BNG encounters the fault and is incapable of continuing processing the service, read, from the database, dynamic information generated by the service on the first BNG, wherein the dynamic information generated by the service on the first BNG is synchronously written by the first BNG into the database, wherein the dynamic information generated by the service on the first BNG includes charging information that is used for real-time traffic statistics collection; and
a processing unit (502), configured to: switch the second BNG to the primary BNG, and enable the second BNG to replace the first BNG to process the service when the monitoring unit determines that the first BNG encounters the fault.

5. The BNG according to claim 4, wherein the second BNG further comprises a writing unit (503), wherein
the writing unit (503) is configured to: when the second BNG processes the service, synchronously write dynamic information generated by the service on the second BNG into the database.

6. A computer-readable storage medium comprising instructions which, when executed by a computer, cause the computer to carry out any method of claims 1 to 3.

## Patentansprüche

1. Verfahren zum Schalten eines primären Breitbandnetz-Gateways (BNG) und eines Backup-BNG, wobei das Verfahren auf ein System angewendet wird, das eine Datenbank, ein erstes BNG und ein zweites BNG umfasst; das erste BNG das primäre BNG ist und das zweite BNG das Backup-BNG ist; das primäre BNG einen Dienst eines Benutzers verarbeitet; und das Verfahren Folgendes umfasst:
nachdem gemeinsame Attributinformationen des ersten BNG und des zweiten BNG durch das erste BNG in die Datenbank geschrieben worden sind und bevor das zweite BNG zu dem primären BNG schaltet, Lesen (301), durch das zweite BNG, der gemeinsamen Attributinformationen des ersten BNG und des zweiten BNG aus der Datenbank, wobei die gemeinsamen Attributinformationen des ersten BNG und des zweiten BNG einen Internetprotokoll(IP)-Adresspool, Informationen, die mit einem virtuellen lokalen Netz (virtual local area network - VLAN) verknüpft sind, oder eine Dienstgüte(quality of service - QoS)-Richtlinie beinhalten;
nachdem statische Informationen des Benutzers durch das erste BNG in die Datenbank geschrieben worden sind und bevor das zweite BNG zu dem primären BNG schaltet, Lesen (302), durch das zweite BNG, der statischen Informationen des Benutzers aus der Datenbank, wobei die statischen Informationen des Benutzers verwendet werden, um den Benutzer zu identifizieren;
Überwachen eines Status des ersten BNG durch das zweite BNG durch eine Verbindungserfassung, um zu bestimmen, ob das erste BNG auf einen Fehler stößt; wenn das zweite BNG bestimmt, dass das erste BNG auf den Fehler stößt und nicht in der Lage ist, das Verarbeiten des Dienstes fortzusetzen, Lesen (303), durch das zweite BNG aus der Datenbank, dynamischer Informationen, die durch den Dienst auf dem ersten BNG erzeugt werden, wobei die dynamischen Informationen, die durch den Dienst auf dem ersten BNG erzeugt werden, durch das erste BNG in die Datenbank synchron geschrieben werden, wobei die dynamischen Informationen, die durch den Dienst auf dem ersten BNG erzeugt werden, Gebühreninformationen beinhalten, die für eine Sammlung von Echtzeit-Verkehrsstatistiken verwendet werden;
und
Schalten (304), durch das zweite BNG, zu dem primären BNG und Ersetzen des ersten BNG, um den Dienst zu verarbeiten, wenn das zweite BNG bestimmt, dass das erste BNG auf den Fehler stößt.

2. Verfahren nach Anspruch 1, wobei das Verfahren ferner Folgendes umfasst:
während des Schaltens, durch das zweite BNG, zu dem primären BNG und Ersetzen des ersten BNG, um den Dienst zu verarbeiten, synchrones Schreiben, durch das zweite BNG, der dynamischen Informationen, die durch den Dienst auf dem zweiten BNG erzeugt werden, in die Datenbank.

3. Verfahren nach Anspruch 1 oder 2, wobei für das erste BNG und das zweite BNG durch Verwenden eines Virtual-Router-Redundanzprotokolls (VRRP) bestimmt wird, dass das erste BNG das primäre BNG ist und das zweite BNG das Backup-BNG ist.

4. Breitbandnetz-Gateway (BNG), wobei das BNG ein zweites BNG in einem System ist, das System ferner eine Datenbank und ein erstes BNG umfasst, das zweite BNG ein Backup-BNG ist, das erste BNG ein primäres BNG ist, das erste BNG einen Dienst eines Benutzers verarbeitet und das zweite BNG Folgendes umfasst:
eine Leseeinheit (501), die für Folgendes konfiguriert ist: nachdem die gemeinsamen Attributinformationen des ersten BNG und des zweiten BNG durch das erste BNG in die Datenbank geschrieben worden sind und bevor das zweite BNG zu dem primären BNG wechselt, Lesen der gemeinsamen Attributinformationen des ersten BNG und des zweiten BNG aus der Datenbank, wobei die gemeinsamen Attributinformationen des ersten BNG und des zweiten BNG einen Internetprotokoll(IP)-Adresspool, Informationen, die mit einem virtuellen lokalen Netz (VLAN) verknüpft sind, oder eine Dienstgüte(QoS)-Richtlinie beinhalten; und nachdem statische Informationen des Benutzers durch das erste BNG in die Datenbank geschrieben worden sind und bevor das zweite BNG zu dem primären BNG schaltet, Lesen der statischen Informationen des Benutzers aus der Datenbank, wobei die statischen Informationen des Benutzers verwendet werden, um den Benutzer zu identifizieren, und
eine Überwachungseinheit, die konfiguriert ist, um einen Status des ersten BNG durch das zweite BNG durch die Verbindungserfassung zu überwachen, um zu bestimmen, ob das erste BNG auf einen Fehler stößt; und wobei
die Leseeinheit (501) ferner für Folgendes konfiguriert ist: wenn die Überwachungseinheit bestimmt, dass das erste BNG auf den Fehler stößt und nicht in der Lage ist, das Verarbeiten des Dienstes fortzusetzen, Lesen, aus der Datenbank, dynamischer Informationen, die durch den Dienst auf dem ersten BNG erzeugt werden, wobei die dynamischen Informationen, die durch den Dienst auf dem ersten BNG erzeugt werden, durch das erste BNG in die Datenbank synchron geschrieben werden, wobei die dynamischen Informationen, die durch den Dienst auf dem ersten BNG erzeugt werden, Gebühreninformationen beinhalten, die für die Sammlung von Echtzeit-Verkehrsstatistiken verwendet werden; und
eine Verarbeitungseinheit (502), die für Folgendes konfiguriert ist: Schalten des zweiten BNG zu dem primären BNG und Aktivieren des zweiten BNG, um das erste BNG zu ersetzen, um den Dienst zu verarbeiten, wenn die Überwachungseinheit bestimmt, dass das erste BNG auf den Fehler stößt.

5. BNG nach Anspruch 4, wobei das zweite BNG ferner eine Schreibeinheit (503) umfasst, wobei
die Schreibeinheit (503) für Folgendes konfiguriert ist: wenn das zweite BNG den Dienst verarbeitet, synchrones Schreiben dynamischer Informationen, die durch den Dienst auf dem zweiten BNG erzeugt werden, in die Datenbank.

6. Computerlesbares Speichermedium, das Anweisungen umfasst, die, wenn sie durch einen Computer durchgeführt werden, den Computer veranlassen, das Verfahren nach einem der Ansprüche 1 bis 3 auszuführen.

## Revendications

1. Procédé de commutation d'une passerelle de réseau large bande primaire, BNG, et une BNG de sauvegarde, le procédé étant appliqué à un système comprenant une base de données, une première BNG et une seconde BNG ; la première BNG étant la BNG primaire, et la seconde BNG étant la BNG de secours ; la BNG primaire traitant un service d'un utilisateur ; et le procédé comprenant :
après l'écriture des informations d'attribut commun de la première BNG et de la seconde BNG par la première BNG dans la base de données et avant la commutation de la seconde BNG à la BNG primaire, la lecture (301), par la seconde BNG, des informations d'attribut commun de la première et de la seconde BNG à partir de la base de données, les informations d'attribut commun de la première BNG et de la seconde BNG comportant un protocole Internet, une adresse IP, un groupe d'adresses, des informations associées au réseau local virtuel, VLAN, ou à une politique de qualité de service, QoS ;
après l'écriture des informations statiques de l'utilisateur par la première BNG dans la base de données et avant la commutation de la seconde BNG à la BNG primaire, la lecture (302), par la seconde BNG, des informations statiques de l'utilisateur à partir de la base de données, les informations statiques de l'utilisateur étant utilisées pour identifier l'utilisateur ;
la surveillance d'un état de la première BNG par la seconde BNG par détection pour déterminer si la première BNG rencontre une défaillance ; lorsque la seconde BNG détermine que la première BNG rencontre la défaillance et est incapable de poursuivre le traitement du service, la lecture (303), par la seconde BNG à partir de la base de données, des informations dynamiques générées par le service sur la première BNG, les informations dynamiques générées par le service sur la première BNG étant écrite de manière synchrone par la première BNG dans la base de données, les informations dynamiques générées par le service sur la première BNG comportant des informations de facturation qui sont utilisées pour la collecte de statistiques de trafic en temps réel ; et
la commutation (304), par la seconde BNG, vers la BNG primaire, et le remplacement de la première BNG pour traiter le service lorsque la seconde BNG détermine que la première BNG rencontre l'anomalie.

2. Procédé selon la revendication 1, dans lequel le procédé comprend en outre :
lors de la commutation, par la seconde BNG, vers la BNG primaire, et du remplacement de la première BNG pour traiter le service, l'écriture synchrone, par la seconde BNG, des informations dynamiques générées par le service sur la seconde BNG dans la base de données.

3. Procédé selon la revendication 1 ou 2, dans lequel pour la première BNG et la seconde BNG, il est déterminé, en utilisant un protocole de redondance de routeur virtuel VRRP, que la première BNG est la BNG primaire et que la seconde BNG est la BNG de sauvegarde.

4. Passerelle de réseau large bande, BNG, dans laquelle la BNG est une seconde BNG dans un système, le système comprend en outre une base de données et une première BNG, la seconde BNG est une BNG de sauvegarde, la première BNG est une BNG primaire, la première BNG traite un service d'un utilisateur, et la seconde BNG comprend :
une unité de lecture (501), configurée pour : après l'écriture des informations d'attribut commun de la première BNG et de la seconde BNG par la première BNG dans la base de données et avant la commutation de la seconde BNG à la BNG primaire, lire les informations d'attribut commun du premier BNG et la seconde BNG de la base de données, les informations d'attribut commun de la première BNG et de la seconde BNG comportant un protocole Internet, IP, un groupe d'adresses, des informations associées au réseau local virtuel, VLAN, ou une politique de qualité de service, QoS ; et après l'écriture des informations statiques de l'utilisateur par la première BNG dans la base de données et avant la commutation de la seconde BNG à la BNG primaire, la lecture des informations statiques de l'utilisateur à partir de la base de données, les informations statiques de l'utilisateur étant utilisées pour identifier l'utilisateur, et
une unité de surveillance configurée pour surveiller un état de la première BNG par la seconde BNG par l'intermédiaire d'une détection de liaison pour déterminer si la première BNG rencontre une défaillance ; et dans laquelle
l'unité de lecture (501) est en outre configurée pour : lorsque l'unité de surveillance détermine que la première BNG rencontre la défaillance et est incapable de poursuivre le traitement du service, la lecture, à partir de la base de données, des informations dynamiques générées par le service sur la première BNG, les informations dynamiques générées par le service sur la première BNG étant écrites de manière synchrone par la première BNG dans la base de données, les informations dynamiques générées par le service sur la première BNG comportant des informations de facturation qui sont utilisées pour la collecte de statistiques de trafic en temps réel ; et
une unité de traitement (502), configurée pour : commuter la seconde BNG vers la BNG primaire, et permettre à la seconde BNG de remplacer la première BNG pour traiter le service lorsque l'unité de surveillance détermine que la première BNG rencontre la défaillance.

5. BNG selon la revendication 4, dans laquelle la seconde BNG comprend en outre une unité d'écriture (503), dans laquelle
l'unité d'écriture (503) est configurée pour : lorsque la seconde BNG traite le service, écrire de manière synchrone des informations dynamiques générées par le service sur la seconde BNG dans la base de données.

6. Support lisible par ordinateur comprenant des instructions qui, lorsqu'elles sont exécutées par un ordinateur, amènent l'ordinateur à effectuer le procédé selon l'une quelconque des revendications 1 à 3.
